# FASCICULE DE BREVET EUROPEEN

(11) **EP 2 038 973 B1**
(45) Date de publication et mention de la délivrance du brevet: **19.05.2010**
(21) Numéro de dépôt: 07803794.2
(22) Date de dépôt: 28.06.2007
(51) Int. Cl.: H01T 13/40, G01L 23/22

(54) **BOUGIE D'ALLUMAGE INTÉGRANT UN CAPTEUR DE PRESSION**
ZÜNDKERZE MIT DRUCKFÜHLER
SPARK PLUG INCORPORATING A PRESSURE SENSOR

(30) Priorité: 07.07.2006 FR 0606195
(43) Date de publication de la demande: 25.03.2009
(73) Titulaire: Continental Automotive France, 31036 Toulouse Cedex 1 (FR); Federal-Mogul Ignition Srl, 41012 Carpi (IT)
(72) Inventeur: RAMOND, Alain, 31330 Merville (FR); TINWELL, Paul, 83440 Fayence (FR)
(74) Mandataire: Hartmann, Jean-Luc
(86) Numéro de dépôt international: PCT/FR2007/001085
(87) Numéro de publication internationale: WO 2008/003846

(56) Documents cités:
- EP-A1- 0 609 787
- EP-A2- 1 199 551
- JP-A- 4 012 488
- US-A- 5 479 817
- US-B2- 6 756 722

## Description

La présente invention concerne une bougie d'allumage intégrant un capteur de pression.

Il est intéressant dans un moteur à explosion de connaître la pression régnant à l'intérieur des cylindres. Ceci permet de réaliser un meilleur contrôle de la combustion dans le moteur. Ce meilleur contrôle permet alors de limiter la consommation de carburant et également d'avoir un moteur moins polluant. Dans les moteurs dits à essence, un capteur de pression mesurant la pression régnant dans les cylindres permet également d'éviter de prévoir un détecteur de cliquetis.

Plusieurs solutions de l'art antérieur existent pour intégrer un capteur permettant de mesurer la pression régnant dans un cylindre de moteur essence. Ainsi par exemple un capteur de pression peut être disposé dans le cylindre. Ceci impose toutefois une modification de la culasse pour prévoir le passage à travers celle-ci du capteur. Il est également connu de mesurer la pression régnant dans un cylindre en mesurant la déformation de la culasse. Cette solution nécessite également d'adapter la culasse du moteur et présente également l'inconvénient d'être très difficile à calibrer.

Il est également connu de monter un capteur sur la bougie d'allumage comme montré par exemple dans le document US-6,756,722. L'inconvénient de la solution proposée dans ce document est l'encombrement du capteur et la complexité du montage proposé. En outre, le capteur révélé dans ce document travaille en compression.

La présente invention a alors pour but de remédier à ces divers problèmes. Elle a donc pour but de fournir une bougie d'allumage équipée d'un capteur de pression permettant de mesurer la pression à l'intérieur du cylindre correspondant, le montage de ce capteur étant d'encombrement réduit et de préférence aussi simple que possible. De préférence également le capteur est un capteur travaillant en traction.

A cet effet, l'invention propose une bougie d'allumage comportant :
- une électrode centrale,
- une âme isolante portant l'électrode centrale,
- un corps extérieur à l'intérieur duquel est montée l'âme isolante et présentant une zone de sertissage du corps extérieur sur l'âme isolante, et
- un capteur de force.

Selon la présente invention, le capteur de force est monté à la périphérie du corps extérieur entre d'une part une douille d'appui solidaire d'une première zone périphérique du corps extérieur et d'autre part une seconde zone périphérique du corps extérieur ; la seconde zone périphérique du corps extérieur est plus éloignée de la zone de sertissage que la première zone périphérique, et la douille d'appui est précontraint sur le capteur de force.

De cette manière, la pression régnant dans la chambre de combustion correspondant à la bougie revendiquée est mesurée en fonction de la déformation du corps extérieur de la bougie. L'âme isolante exerce au niveau de la zone de sertissage une contrainte sur le corps extérieur qui est proportionnelle à la pression régnant dans la chambre de combustion. La bougie selon l'invention permet de mesurer les forces exercées au niveau de cette zone de sertissage.

Selon une forme de réalisation d'une bougie selon l'invention, permettant une réalisation facile de cette bougie, le corps extérieur de la bougie d'allumage présente par exemple au niveau de sa seconde zone périphérique un épaulement extérieur contre lequel vient reposer une face du capteur de force. Dans cette forme de réalisation, une pièce intermédiaire peut être disposée entre l'épaulement et le capteur de force.

Pour obtenir une excellente liaison entre l'élément d'appui et la première zone périphérique du corps extérieur, l'élément d'appui est avantageusement rendu solidaire de la première zone périphérique du corps extérieur par soudage.

Pour mieux mesurer les contraintes au niveau de la zone de sertissage, la première zone périphérique est de préférence à proximité immédiate de la zone de sertissage ou confondue avec celle-ci.

Différents types de capteurs de force peuvent être utilisés. Le capteur de force utilisé peut être par exemple un capteur piézo-électrique. Un capteur piézo-résistif pourrait également être utilisé dans une telle application.

Une variante de réalisation préférée comporte en outre un capot périphérique extérieur protégeant le capteur de force. Dans le cas où une pièce intermédiaire est prévue entre un épaulement extérieur du corps extérieur et le capteur de force, le capot périphérique est monté par exemple entre la pièce intermédiaire et l'élément d'appui.

Une variante de réalisation permettant de limiter l'encombrement longitudinal global dû à la présence du dispositif permettant de mesurer la pression prévoit que l'élément d'appui présente une surface extérieure de section transversale hexagonale.

La présente invention concerne également un moteur à combustion interne, **caractérisé en ce qu**'il comporte au moins une bougie telle que décrite ci-dessus.

Des détails et avantages de la présente invention ressortiront mieux de la description qui suit, faite en référence aux dessins schématiques annexés sur lesquels :

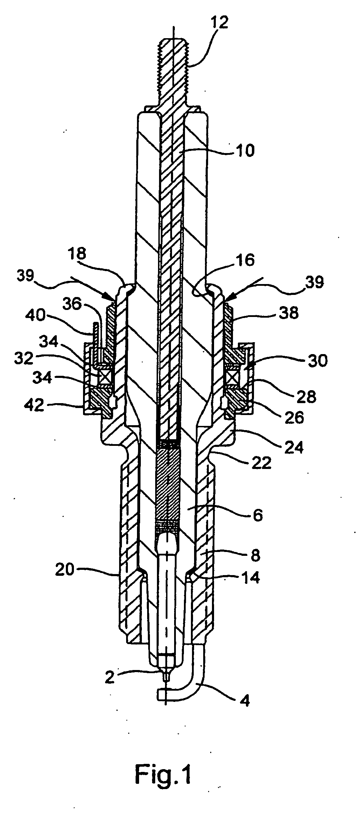

L'unique figure représente une bougie d'allumage selon l'invention en coupe longitudinale.

On reconnaît sur cette unique figure les éléments habituellement constitutifs d'une bougie d'allumage. Cette dernière comporte de façon classique une électrode centrale 2, une électrode de masse 4, une âme isolante 6 et un corps extérieur 8, appelé aussi parfois culot de bougie.

Une bougie d'allumage est destinée à produire une étincelle dans une chambre de combustion d'un moteur à combustion interne. Cette étincelle est réalisée entre les deux électrodes. L'électrode centrale 2 est montée à une extrémité de l'âme isolante 6, à l'intérieur de celle-ci. Elle est alimentée en courant haute tension par l'intermédiaire d'une tige 10, elle aussi montée à l'intérieur de l'âme isolante 6 et traversant cette âme isolante 6 pour déboucher à son extrémité opposée à l'électrode centrale 2. L'extrémité de la tige 10 opposée à l'électrode centrale 2 porte un filetage 12 destiné à recevoir un écrou de connexion (non représenté).

L'âme isolante 6, réalisée généralement dans une céramique, est montée à l'intérieur du corps extérieur 8. Ce dernier présente une forme générale cylindrique circulaire tubulaire. Une extrémité de ce corps extérieur 8, appelée par la suite extrémité inférieure, porte l'électrode de masse 4. Cette dernière fait face à l'électrode centrale 2.

L'âme isolante 6 est positionnée dans le corps extérieur 8 par une portée conique 14. Elle est maintenue dans ce corps extérieur 8 par sertissage. L'extrémité supérieure du corps extérieur 8 est rabattue sur un épaulement 16 de l'âme isolante 6 réalisant ainsi le sertissage de l'âme isolante 6 dans le corps extérieur 8. On réalise ainsi une zone de sertissage 18 à l'extrémité supérieure du corps extérieur 8 maintenant l'âme isolante 6 prisonnière dans le corps extérieur 8 et en appui sur la portée conique 14.

De manière habituelle, la surface extérieure du corps extérieur 8 présente du côté de son extrémité inférieure un filetage 20. Au-dessus de ce filetage, se trouve un logement 22 destiné à recevoir un joint (non représenté) appelé aussi joint de siège.

Au-dessus du logement 22, le corps extérieur 8 présente une zone élargie 24 formant butée lors du vissage de la bougie dans une culasse. La partie supérieure de cette zone élargie 24 présente un épaulement sur lequel vient s'adapter une bague d'appui 26. La face radiale inférieure de cette bague d'appui 26 repose sur la zone élargie 24 du corps extérieur 8. La face radiale supérieure 28 de cette bague d'appui sert de support pour un capteur de force 30. Dans la forme de réalisation représentée au dessin, il s'agit d'un capteur piézo-électrique comportant un élément piézo-électrique 32 et deux électrodes 34 et qui est isolé par des rondelles isolantes 36.

Le capteur de force 30 est précontraint en appui par un élément d'appui constitué dans la forme de réalisation représentée par une douille d'appui 38. Cette dernière est de forme adaptée à la forme de la partie supérieure du corps extérieur 8. Elle s'étend depuis le capteur de force 30 jusqu'à la zone de sertissage 18. Cette douille d'appui 38 est soudée sur le corps extérieur 8. La zone de soudage est montrée sur la figure par des flèches 39.

Le capteur de force 30 est ainsi monté entre la zone élargie 24 du corps extérieur 8 (par l'intermédiaire de la bague d'appui 26) et la douille d'appui 38. Ainsi, la douille d'appui 38 étant soudée à proximité de la zone de sertissage 18, le capteur de force 30 mesure les contraintes entre la zone de sertissage 18 et la zone élargie 24 du corps extérieur 8 de la bougie.

Dans sa partie supérieure, c'est-à-dire opposée au capteur de force 30, la douille d'appui 38 présente une surface extérieure cylindrique de section hexagonale. Le vissage de la bougie décrite dans une culasse se fait alors en agissant sur cette douille d'appui 38.

La zone de sertissage 18 est sollicitée vers le haut lors d'une combustion dans la chambre de combustion correspondante. La zone élargie 24, se trouvant à proximité de la culasse et solidaire de celle-ci par vissage, peut être considérée comme n'étant pas sollicitée. La partie du corps extérieur 8, entre sa zone élargie 24 et sa zone de sertissage 18, est une zone déformable élastiquement. La mesure faite par le capteur de force 30 permet, après traitement du signal, de connaître les contraintes dans cette zone élastiquement déformable. Une calibration permet alors par la suite de connaître la pression régnant à l'intérieur de la chambre de combustion correspondante.

Comme on peut le voir sur la figure, l'électrode 34 présente une patte de connexion 40 s'étendant longitudinalement par rapport à la bougie. Cette patte de connexion 40 s'étend alors parallèlement à la douille d'appui 38. Le capteur de force 30 est quant à lui protégé des agressions extérieures par un capot périphérique 42. Ce dernier est de préférence métallique et permet alors aussi de blinder le capteur de force 30 contre les bruits électriques.

La présente invention a l'avantage de permettre le montage d'un capteur de pression sur une bougie d'allumage de type classique en ne modifiant quasiment pas cette bougie. Le capteur de pression 30 vient se monter à la périphérie du corps extérieur 8 de la bougie. On remarque que l'encombrement de ce capteur est très réduit tant en termes d'encombrement radial qu'en termes d'encombrement longitudinal. En outre, le nombre de pièces mises en oeuvre est très limité. Le montage du capteur est lui aussi facile. En effet, les divers éléments sont empilés autour de la partie supérieure du corps externe 8 de la bougie puis une contrainte calibrée est exercée sur la douille d'appui 38 mettant ainsi sous précontrainte le capteur de force 30 puis, la contrainte étant maintenue, la douille d'appui 38 est soudée.

Un tel capteur, monté de la sorte, fournit un meilleur signal qu'un capteur de pression monté entre la culasse et le corps de la bougie. Dans ce cas de l'art antérieur, la précontrainte est réalisée lors du vissage de la bougie dans la culasse. Il est alors difficile d'obtenir d'une part une contrainte déterminée au niveau du capteur de force et d'autre part de maintenir cette contrainte dans le temps.

La présente invention ne se limite pas à la forme de réalisation préférée décrite ci-dessus à titre d'exemple non limitatif. Elle concerne également les variantes de réalisation à la portée de l'homme du métier.

Ainsi, par exemple, le capteur de force utilisé pourrait être d'un type différent du capteur piézo-électrique décrit. Il pourrait par exemple s'agir d'un capteur piézo-résistif, ou bien encore d'autres capteurs de force.

Le montage proposé est un montage préférentiel. Ainsi, par exemple, la présence d'une bague d'appui entre la face inférieure du capteur de force et le corps extérieur de la bougie n'est pas obligatoire.

Bien qu'il soit préférable de souder la douille d'appui à proximité immédiate de la zone de sertissage, la soudure de cette douille sur le corps extérieur peut aussi être réalisée à distance de la zone de sertissage.

## Revendications

1. Bougie d'allumage comportant :
- une électrode centrale (2),
- une âme isolante (6) portant l'électrode centrale (2),
- un corps extérieur (8) à l'intérieur duquel est montée l'âme isolante (6) et présentant une zone de sertissage (18) du corps extérieur (8) sur l'âme Isolante (6), et
- un capteur de force (30),
**caractérisée en ce que** le capteur de force (30) est monté à la périphérie du corps extérieur (8) entre d'une part une douille d'appui (38) solidaire d'une première zone périphérique du corps extérieur (8) et d'autre part une seconde zone (24) périphérique du corps extérieur (8),
**en ce que** la seconde zone (24) périphérique du corps extérieur (8) est plus éloignée de la zone de sertissage (18) que la première zone périphérique, et
**en ce que** la douille d'appui (38) est précontrainte sur le capteur de force (30).

2. Bougie d'allumage selon la revendication 1, **caractérisée en ce que** le corps extérieur (8) présente au niveau de sa seconde zone (24) périphérique un épaulement extérieur (28) contre lequel vient reposer une face du capteur de force (30).

3. Bougie d'allumage selon la revendication 2, **caractérisée en ce qu'**une pièce intermédiaire (26) est disposée entre l'épaulement (28) et le capteur de force (30).

4. Bougie d'allumage selon l'une des revendications 1 à 3, **caractérisée en ce que** la douille d'appui (38) est rendue solidaire de la première zone 18 périphérique du corps extérieur (8) par soudage.

5. Bougie d'allumage selon l'une des revendications 1 à 4, **caractérisée en ce que** la première zone périphérique est à proximité immédiate de la zone de sertissage (18).

6. Bougie d'allumage selon l'une des revendications 1 à 5, **caractérisée en ce que** le capteur de force (30) est un capteur piézo-électrique.

7. Bougie d'allumage selon l'une des revendications 1 à 6, **caractérisée en ce qu'**elle comporte en outre un capot périphérique (42) extérieur métallique protégeant le capteur de force (30).

8. Bougie d'allumage selon les revendications 3 et 7, **caractérisée en ce que** le capot périphérique (42) est monté entre la pièce intermédiaire (26) et la douille d'appui (38).

9. Bougie d'allumage selon l'une des revendications 1 à 8, **caractérisée en ce que** la douille d'appui (38) présente une surface extérieure de section transversale hexagonale.

10. Moteur à combustion interne, **caractérisé en ce qu'**il comporte au moins une bougie selon l'une des revendications 1 à 9.

## Claims

1. Spark plug including:
- a central electrode (2),
- an insulating core (6) bearing the central electrode (2),
- an external body (8) inside which the insulating core (6) is mounted and which has a crimped region (18) of the external body (8) on the insulating core (6), and
- a force sensor (30),
**characterized in that** the force sensor (30) is mounted at the periphery of the external body (8) between, on the one hand, a support ring (38) secured to a first peripheral region of the external body (8) and, on the other hand, a second peripheral region (24) of the external body (8),
**in that** the second peripheral region (24) of the external body (8) is further away from the crimping region (18) than the first peripheral region, and
**in that** the support ring (38) is prestressed against the force sensor (30).

2. Spark plug according to Claim 1, **characterized in that** the level of the second peripheral region (24) of the external body (8) has an external shoulder (28) against which the surface of the force sensor (30) rests.

3. Spark plug according to Claim 2, **characterized in that** an adapter (26) is placed between the shoulder (28) and the force sensor (30).

4. Spark plug according to any of Claims 1 to 3, **characterized in that** the support ring (38) Is attached to the first peripheral region (18) of the external body (8) by welding.

5. Spark plug according to any of Claims 1 to 4, **characterized in that** the first peripheral region is in the immediate vicinity of the crimping region (18).

6. Spark plug according to any of Claims 1 to 5, **characterized in that** the force sensor (30) is a piezoelectric sensor.

7. Spark plug according to any of Claims 1 to 6, **characterized in that** it also includes an external metal peripheral cap (42) that protects the force sensor (30).

8. Spark plug according to any of Claims 3 to 7, **characterized in that** the peripheral cap (42) is mounted between the adapter (26) and the support ring (38).

9. Spark plug according to any of Claims 1 to 8, **characterized in that** the support ring (38) has an external hexagonal cross-section surface.

10. Internal combustion motor, **characterized in that** it includes at least one spark plug according to any of Claims 1 to 9.

## Patentansprüche

1. Zündkerze, die umfasst:
- eine Mittelelektrode (2),
- einen isolierenden Kern (6), der die Mittelelektrode (2) trägt,
- einen Außenkörper (8), innerhalb dessen der isolierende Kern (6) montiert ist und der eine Zone (18) aufweist, um den Außenkörper (8) an dem isolierenden Kern (6) zu crimpen, und
- einen Kraftsensor (30),
**dadurch gekennzeichnet, dass** der Kraftsensor (30) am Umfang des Außenkörpers (8) zwischen einerseits einer Abstützhülse (38), die mit einer ersten Umfangszone des Außenkörpers (8) fest verbunden ist, und andererseits einer zweiten Umfangszone (24) des Außenkörpers (8) montiert ist,
dass die zweite Umfangszone (24) des Außenkörpers (8) von der Crimpzone (18) weiter entfernt Ist als die erste Umfangszone und
dass die Abstützhülse (38) an dem Kraftsensor (30) vorbelastet ist.

2. Zündkerze nach Anspruch 1, **dadurch gekennzeichnet, dass** der Außenkörper (8) auf Höhe seiner zweiten Umfangszone (24) eine Außenschulter (28) aufweist, an der eine Fläche des Kraftsensors (30) anliegt.

3. Zündkerze nach Anspruch 2, **dadurch gekennzeichnet, dass** zwischen der Schulter (28) und dem Kraftsensor (30) ein Zwischenteil (26) angeordnet ist.

4. Zündkerze nach einem der Ansprüche 1 bis 3, **dadurch gekennzeichnet, dass** die Abstützhülse (38) mit der ersten Umfangszone (18) des Außenkörpers (8) durch Schweißen fest verbunden Ist.

5. Zündkerze nach einem der Ansprüche 1 bis 4, **dadurch gekennzeichnet, dass** sich die erste Umfangszone in unmittelbarer Nähe der Crimpzone (18) befindet.

6. Zündkerze nach einem der Ansprüche 1 bis 5, **dadurch gekennzeichnet, dass** der Kraftsensor (30) ein piezoelektrischer Sensor ist.

7. Zündkerze nach einem der Ansprüche 1 bis 6, **dadurch gekennzeichnet, dass** sie außerdem eine metallische äußere Umfangskappe (42) aufweist, die den Kraftsensor (30) schützt.

8. Zündkerze nach den Ansprüchen 3 und 7, **dadurch gekennzeichnet, dass** die Umfangskappe (42) zwischen dem Zwischenteil (26) und der Abstützhülse (38) montiert ist.

9. Zündkerze nach einem der Ansprüche 1 bis 8, **dadurch gekennzeichnet, dass** die Abstützhülse (38) eine äußere Oberfläche mit sechseckigem Querschnitt aufweist.

10. Brennkraftmaschine, **dadurch gekennzeichnet, dass** sie wenigstens eine Kerze nach einem der Ansprüche 1 bis 9 enthält.
